# EUROPEAN PATENT SPECIFICATION

(11) **EP 3 748 615 B1**
(45) Date of publication and mention of the grant of the patent: **13.09.2023**
(21) Application number: 18903458.0
(22) Date of filing: 17.12.2018
(51) Int. Cl.: G02B 6/08

(54) **DISPLAY DEVICE AND OPTICAL DEVICE**
ANZEIGEVORRICHTUNG UND OPTISCHE VORRICHTUNG
DISPOSITIF D'AFFICHAGE ET DISPOSITIF OPTIQUE

(30) Priority: 31.01.2018 JP 2018015876
(43) Date of publication of application: 09.12.2020
(73) Proprietor: Sony Group Corporation, Tokyo 108-0075 (JP)
(72) Inventor: NIWA, Hayato, Tokyo 141-8610 (JP); YAMAMOTO, Takeshi, Tokyo 141-8610 (JP); ARAKI, Soya, Tokyo 108-0075 (JP); URUSHIYAMA, Yasuhisa, Tokyo 108-0075 (JP)
(74) Representative: 2SPL Patentanwälte PartG mbB
(86) International application number: PCT/JP2018/046297
(87) International publication number: WO 2019/150796

(56) References cited:
- JP-A- H0 643 479
- JP-A- S61 185 785
- JP-A- 2001 005 414
- JP-A- 2004 170 870
- JP-A- 2005 017 906
- JP-A- 2006 308 707
- JP-A- 2007 193 234
- JP-A- 2009 198 688
- JP-A- 2014 119 562
- KR-A- 20080 011 894
- US-A1- 2006 007 054
- US-A1- 2011 025 594
- US-A1- 2017 094 814
- US-A1- 2017 094 815
- US-A1- 2017 371 612

## Description

### Technical Field

The present disclosure relates to a display apparatus and an optical device applied to this display apparatus.

### Background Art

A large-sized multi-display including a plurality of display panels arranged in array has been hitherto proposed (for example, see PTL 1). Moreover, the use of fibers for guiding light in displays has been proposed (for example, see PTL 2 and PTL 3)

### Citation List

### Patent Literature

PTL 1: Japanese Unexamined Patent Application Publication No. 2014-119562
PTL 2: US 2011/025594 A1
PTL 3: US 2017/094814 A1

### Summary of the Invention

In such a multi-display, a boundary portion between adjacent ones of the plurality of display panels arranged side by side is often visually identified as a dark line.

Therefore, it is desired to provide a display apparatus that enables display of a good image where a dark line is less visible to a viewer and an optical device suitable for use in the display apparatus.

A display apparatus as an embodiment of the claimed invention includes a first display section, a first light guide member, a second light guide member, and a filler material. The first display section includes a first display surface from which a first image light is emitted. The first light guide member includes an integrated bundle of a plurality of first optical fibers, each of the first optical fibers including a first core portion and a first cladding portion surrounding the first core portion. The first core portion guides the first image light from a first incident surface facing the first display surface to a first emission surface positioned opposite to the first incident surface. The second light guide member is disposed adjacent to the first light guide member. The second light guide member includes an integrated bundle of a plurality of second optical fibers, each of the second optical fibers including a second core portion and a second cladding portion surrounding the second core portion. The second core portion guides the first image light from a second incident surface facing the first display surface to a second emission surface positioned opposite to the second incident surface. The filler material is filled in a gap between the first light guide member and the second light guide member and transmits the first image light. The filler material covers side surfaces of the first light member and the second light member such, that, if a side surface of a first core portion and a side surface of a second core portion is exposed towards the filler material, light leaking from the first core portion is transmitted through the filler material towards the second core portion and propagates through the second core portion towards the second emission surface.

An optical device as an embodiment of the claimed invention includes: a first light guide member and a second light guide member disposed adjacent to each other, and a filler material. Each of the first light guide member and the second light guide member includes an integrated bundle of a plurality of optical fibers, each of the optical fibers including a core portion and a cladding portion surrounding the core portion. The core portion guides external light from an incident surface, on which the external light is incident, to an emission surface positioned opposite to the incident surface. The filler material is filled in a gap between the first light guide member and the second light guide member. The filler material transmits the external light. The filler material covers side surfaces of the first light member and the second light member such, that, if a side surface of a first core portion of the first light guide member and a side surface of a second core portion of the second light guide member is exposed towards the filler material, light leaking from the first core portion is transmitted through the filter material towards the second core portion and propagates through the second core portion towards the second emission surface.

According to the display apparatus as the embodiment of the present disclosure, it is possible to display a good image where a dark line is less visible to the viewer. According to the optical device as the embodiment of the present disclosure, it is possible to use the above-described display apparatus.

It is to be noted that the effects of the present disclosure are not limited thereto and may be any one of the effects described below.

### Brief Description of the Drawings

[FIG. 1A] FIG. 1A is a front view illustrating an example of an entire configuration of a display apparatus according to an embodiment of the claimed invention.
[FIG. 1B] FIG. 1B is a cross-sectional view illustrating the configuration of the display apparatus illustrated in FIG. 1A.
[FIG. 2A] FIG. 2A is an enlarged cross-sectional view illustrating a main portion of the display apparatus illustrated in FIG. 1A.
[FIG. 2B] FIG. 2B is an enlarged plan view illustrating a main portion of a fiber optic plate illustrated in FIG. 1A.
[FIG. 3A] FIG. 3A is an enlarged cross-sectional view illustrating a vicinity of a side surface of the fiber optic plate illustrated in FIG. 2B.
[FIG. 3B] FIG. 3B is another enlarged cross-sectional view illustrating the vicinity of the side surface of the fiber optic plate illustrated in FIG. 2B.
[FIG. 4] FIG. 4 is a conceptual diagram for explaining a state of propagation of image light in the display apparatus illustrated in FIG. 1A.
[FIG. 5] FIG. 5 is a conceptual diagram for explaining a state of image light that propagates through an abutting portion between a plurality of light guide members in the fiber optic plate illustrated in FIG. 2A.
[FIG. 6A] FIG. 6A is an enlarged conceptual diagram illustrating an abutting portion between a plurality of light guide members in a fiber optic plate as a reference example not according to the invention.
[FIG. 6B] FIG. 6B is a conceptual diagram for explaining a state of image light that propagates through an abutting portion between a plurality of light guide members in the fiber optic plate as the reference example.

### Modes for Carrying Out the Invention

Hereinafter, embodiments of the present disclosure will be described in detail with reference to the drawings. It is to be noted that the description is given in the following order.

### 1. First Embodiment

Example of a display apparatus that has a plurality of display units arranged in array, each of the display units including, in sequence, a display panel, a fiber optic plate having an optical axis inclined with respect to a display surface of the display panel, and an optical film

### 2. Modification Example

### <1. Embodiment>

### [Configuration of Display Apparatus 1]

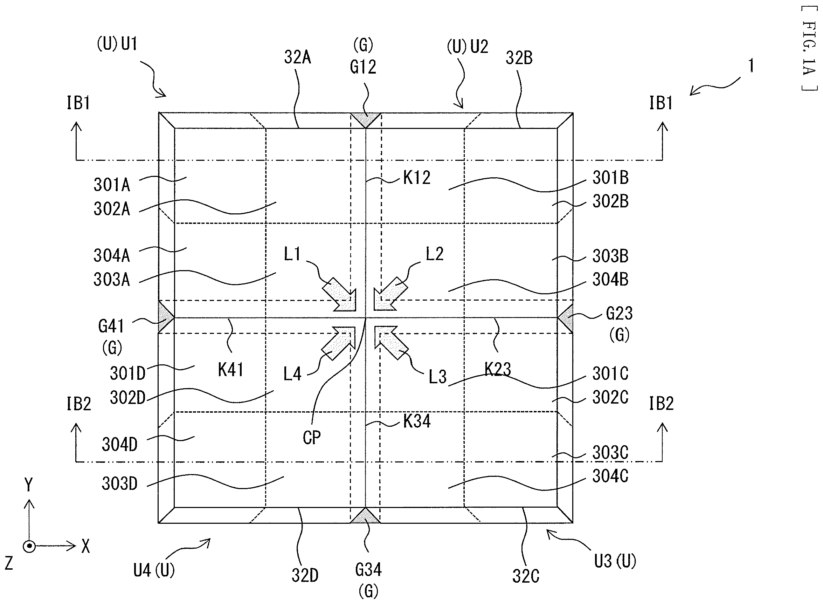

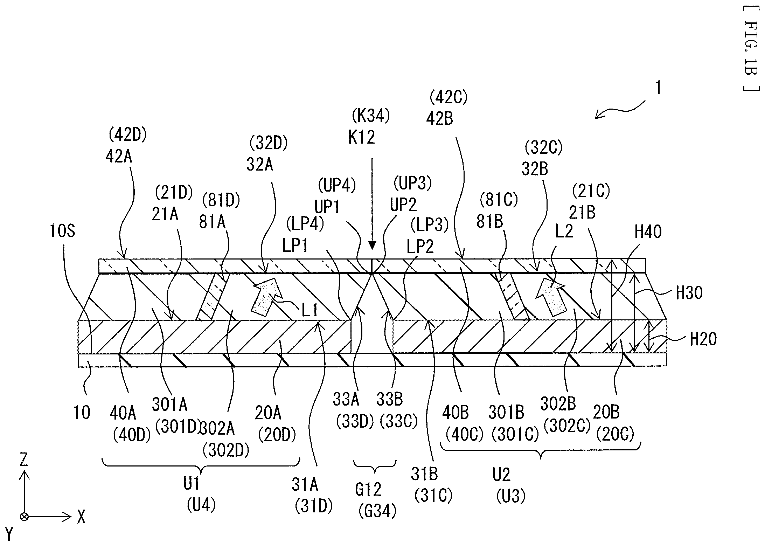

FIGs. 1A and 1B each schematically illustrate an example of an entire configuration of a display apparatus 1 as an embodiment of the claimed invention. FIG. 1A illustrates a planar configuration of the display apparatus 1, and FIG. 1B illustrates a cross-sectional configuration thereof. FIG. 1B corresponds to a cross-sectional view in an arrow direction along a cutting line IB1-IB1 and a cutting line IB2-IB2 illustrated in FIG. 1A. It is to be noted that the cross-sectional configuration along the cutting line IB1-IB1 in FIG. 1A is substantially the same as the cross-sectional configuration along the cutting line IB2-IB2 in FIG. 1A. However, regarding components denoted by reference characters with parentheses attached, the components in the cross-sectional configuration along the cutting line IB2-IB2 in FIG. 1A are denoted by the respective reference characters with the parentheses attached.

The display apparatus 1 includes, for example, one substrate 10 (illustrated in FIG. 1B) and a plurality of display units U (illustrated in parentheses in FIG. 1A) arranged on the substrate 10. The substrate 10 is formed of a material with high rigidity such as metal. Although FIG. 1A illustrates four display units U1 to U4 arranged in a matrix as an example, the present disclosure is not limited to this example.

The display units U1 to U4 include respective display panels 20A to 20D as a display section, respective fiber optic plates 30A to 30D, and respective optical films 40A to 40D laminated on the common substrate 10 in sequence. In the description of the present specification and the drawings, the display units U1 to U4 may be collectively described as a display unit U. Likewise, in the description of the present specification and the drawings, the display panels 20A to 20D may be collectively described as a display panel 20, the fiber optic plates 30A to 30D may be collectively described as a fiber optic plate 30, and the optical films 40A to 40D may be collectively described as an optical film 40. In FIG. 1A, the illustration of the optical films 40A to 40D is omitted.

In the present specification, a direction in which the display panel 20A and the display panel 20B are adjacent to each other and in which the display panel 20C and the display panel 20D are adjacent to each other is an X-axis direction. Additionally, a direction in which the display panel 20A and the display panel 20D are adjacent to each other and in which the display panel 20B and the display panel 20C are adjacent to each other is a Y-axis direction. Furthermore, a direction perpendicular to both the X-axis direction and the Y-axis direction is a Z-axis direction. In the present specification, the X-axis direction may be referred to as a horizontal direction, the Y-axis direction may be referred to as a vertical direction, and the Z-axis direction may be referred to as a thickness direction. In addition, a position as viewed in the Z-axis direction may be referred to as a height position.

### (Display Panel 20)

Each of the plurality of display panels 20 is, for example, a liquid crystal display using a liquid crystal device, or an organic EL display using an organic EL (electroluminescence) device. The display panels 20A to 20D include respective display surfaces 21A to 21D from which image light L1 to L4 are emitted. The display panels 20A to 20D are arranged along the respective display surfaces 21A to 21D. The display surfaces 21A to 21D in the display panels 20A to 20D may all be present at the same height position. That is all the display surface 21A to 21D may be positioned at a height H20 with the height position of a surface 10S of the substrate 10 being defined as a reference position.

A gap G is present as a joint portion between adjacent ones of the plurality of display panels 20. Specifically, a strip-shaped gap G12 extending in the Y-axis direction is present between the display panel 20A and the display panel 20B, while a strip-shaped gap G23 extending in the X-axis direction is present between the display panel 20B and the display panel 20C. Further, a strip-shaped gap G34 extending in the Y-axis direction is present between the display panel 20C and the display panel 20D, while a strip-shaped gap G41 extending in the X-axis direction is present between the display panel 20D and the display panel 20A. In the description of the present specification and the drawings, these gaps G12, G23, G34, and G41 are collectively described as the gap G. The gap G in the display apparatus 1 is present in a cross shape on an XY plane as a whole. Since the gap G excluding a part thereof is covered with the fiber optic plate 30, the gap G is in a state of being hardly visible to a viewer when viewed in the Z-axis direction. Due to this, the gap G is indicated by a broken line in FIG. 1A.

### (Fiber Optic Plate 30)

The fiber optic plates 30A to 30D are respectively arranged along the display surfaces 21A to 21D so as to correspond to the respective display panels 20A to 20D. The fiber optic plates 30A to 30D have respective incident surfaces 31A to 31D, respective emission surfaces 32A to 32D, and respective side surfaces 33A to 33D. In the description of the present specification and the drawings, the incident surfaces 31A to 31D may be collectively described as an incident surface 31, the emission surfaces 32A to 32D may be collectively described as an emission surface 32, and the side surfaces 33A to 33D may be collectively described as a side surface 33. The incident surfaces 31A to 31D are surfaces that respectively face the display surfaces 21A to 21D and on which the image light L1 to L4 from the display surfaces 21A to 21D are respectively incident. The emission surfaces 32A to 32D are the surfaces respectively located on the opposite sides to the incident surfaces 31A to 31D and from which the image light L1 to L4 passing through the inside of the fiber optic plates 30A to 30D are respectively emitted. The side surfaces 33A to 33D are surfaces respectively coupling the incident surfaces 31A to 31D and the emission surfaces 32A to 32D. All the emission surfaces 32A to 32D in the fiber optic plates 30A to 30D may be present at the same height position. That is, all the emission surfaces 32A to 32D may be positioned at the height H30 with the height position of the surface 10S of the substrate 10 being defined as the reference position.

The fiber optic plate 30A is formed by coupling light guide members 301A to 304A arranged on the display surface 21A in a matrix, using a transparent filler material 81A (see FIG. 1B). The transparent filler material 81A is a UV-polymerizable transparent resin, a transparent adhesive, or the like. Each of the light guide members 301A to 304A is a plate-shaped member that includes an integrated bundle of a plurality of optical fibers 34. Similarly, the fiber optic plate 30B is formed by coupling light guide members 301B to 304B arranged on the display surface 21B in a matrix, using a transparent filler material 81B (see FIG. 1B). The transparent filler material 81B is a UV-polymerizable transparent resin, a transparent adhesive, or the like. Each of the light guide members 301B to 304B is a plate-shaped member that includes an integrated bundle of a plurality of optical fibers 34. The fiber optic plate 30C is formed by coupling the light guide members 301C to 304C arranged on the display surface 21C in a matrix, using a transparent filler material 81C (see FIG. 1B). The transparent filler material 81C is a UV-polymerizable transparent resin, a transparent adhesive, or the like . Each of the light guide members 301C to 304C is a plate-shaped member that includes an integrated bundle of a plurality of optical fibers 34. The fiber optic plate 30D is formed by coupling the light guide members 301D to 304D arranged on the display surface 21D in a matrix, using a transparent filler material 81D (see FIG. 1B). The transparent filler material 81D is a UV-polymerizable transparent resin, a transparent adhesive, or the like. Each of the light guide members 301D to 304D is a plate-shaped member that includes an integrated bundle of a plurality of optical fibers 34. The filler materials 81A to 81D enable transmission of the image light L1 to L4 at high transmittance. In the present specification, the light guide members 301A to 304D, 301B to 304B, 301C to 304C, and 301D to 304D may be collectively described as light guide members 301 to 304. The filler materials 81A to 81D may be collectively described as a filler material 81. The filler material 81 is provided to fill each gap between adjacent ones of the light guide members 301 to 304. A refractive index of the filler material 81 is desirably equal to or less than a refractive index of a core portion 341 of the optical fiber 34 and is greater than 1.

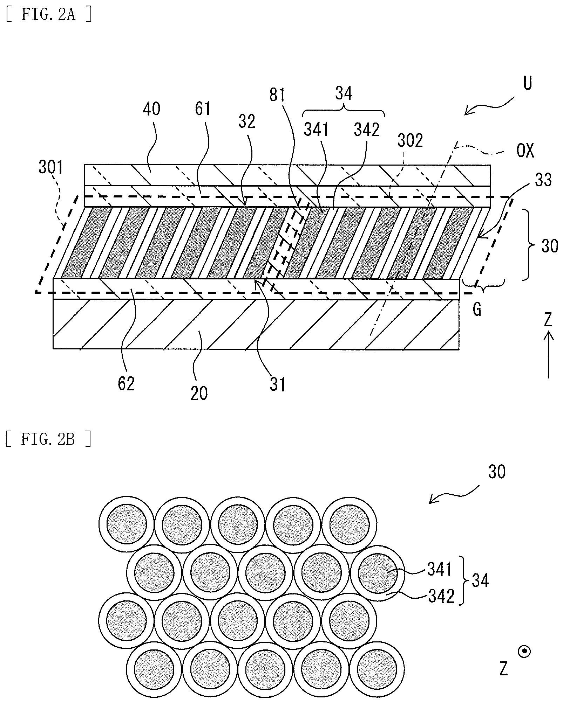

FIG. 2A is an enlarged cross-sectional view illustrating any display unit U, which is a main portion of the display apparatus 1. In addition, FIG. 2B is an enlarged plan view illustrating a main portion of the fiber optic plate 30. As illustrated in FIG. 2A and FIG. 2B, each of the plurality of optical fibers 34 includes a core portion 341 that guides the image light L (L1 to L4) from the incident surface 31 to the emission surface 32, and a cladding portion 342 that surrounds the core portion 341 in the X-Y plane. The core portion 341 has an optical axis OX inclined with respect to each of all the incident surface 31, the emission surface 32, and the Z axis. It is to be noted that each of the core portions 341 of the plurality of optical fibers 34 in the fiber optic plate 30A has the optical axis OX inclined substantially in the same direction. Therefore, the core portions 341 of the plurality of optical fibers 34 included in the fiber optic plate 30A extend substantially in parallel with each other. In addition to the optical axis OX of the fiber optic plate 30A, the same is applied to an optical axis OX of each of the plurality of optical fibers 34 in the fiber optic plates 30B to 30D. The image light L1 to L4 respectively travels inside the fiber optic plates 30A to 30D in the respective directions indicated by the arrows, i.e., along the respective optical axes OX of the fiber optic plates 30A to 30D.

Each of the fiber optic plates 30A to 30D forms a substantially parallelogram on the cross-section including the Z-axis, for example, as illustrated in FIG. 1B. Thus, all the side surfaces 33A to 33D of the fiber optic plates 30A to 30D are inclined with respect to the Z-axis. It is noted that in the display apparatus 1, the side surfaces 33A to 33D are respectively inclined toward the center position CP (FIG. 1A) as the distance from each of the display surfaces 21A to 21D increases in the Z-axis direction. Each of the optical axes OX of the plurality of optical fibers 34 in the fiber optic plate 30A extends in a direction along the traveling direction of the image light L1, for example, illustrated in FIG. 1A and FIG. 1B. Each of the optical axes OX of the plurality of optical fibers 34 in the fiber optic plate 30B extends in a direction along the traveling direction of the image light L2, for example, illustrated in FIG. 1A and FIG. 1B. Each of the optical axes OX of the plurality of optical fibers 34 in the fiber optic plate 30C extends in a direction along the traveling direction of the image light L3, for example, illustrated in FIG. 1A and FIG. 1B. Each of the optical axes OX of the plurality of optical fibers 34 in the fiber optic plate 30D extends in a direction along the traveling direction of the image light L4, for example, illustrated in FIG. 1A and FIG. 1B.

Specifically, as shown in FIG. 1B, for example, the side surface 33A in the vicinity of the gap G12 where the fiber optic plate 30A and the fiber optic plate 30B face each other is inclined so as to approach the side surface 33B facing the side surface 33A from its lower end position LP1 toward its upper end position UP1. That is, the side surface 33A protrudes outward so as to cover a part of the gap G12. Meanwhile, the side surface 33B protrudes outward so as to approach the side surface 33A from its lower end position LP2 to its upper end position UP2, that is, so as to cover the other part of the gap G12. In this way, a distance between the lower end position LP1 and the lower end position LP2 is larger than a distance between the upper end position UP1 and the upper end position UP2 in a boundary position K12. Here, the side surface 33A and the side surface 33B are desirably abutted against each other in the upper end position UP1 and the upper end position UP2. The lower end position LP1 is also an end edge position of the incident surface 31A, while the lower end position LP2 is also an end edge position of the incident surface 31B. The upper end position UP1 is also an end edge position of the emission surface 32A, while the upper end position UP2 is also an end edge position of the emission surface 32B. Therefore, a distance between a position of the image light L1 when emitted from the emission surface 32A and a position of the image light L2 when emitted from the emission surface 32B is smaller than a distance between a position of the image light L1 when incident on the incident surface 31A and a position of the image light L2 when incident on the incident surface 31B.

Also, the side surface 33C, for example, in the vicinity of the gap G34 where the fiber optic plate 30C and the fiber optic plate 30D face each other is inclined so as to approach the side surface 33D facing the side surface 33C from its lower end position LP3 toward its upper end position UP3. That is, the side surface 33C protrudes outward so as to cover a part of the gap G34. Meanwhile, the side surface 33D protrudes outward so as to approach the side surface 33C from its lower end position LP4 to its upper end position UP4, that is, so as to cover the other part of the gap G34. In this way, also in a boundary position K34, a distance between the lower end position LP3 and the lower end position LP4 is larger than a distance between the upper end position UP3 and the upper end position UP4. Here, the side surface 33C and the side surface 33D are desirably abutted against each other in the upper end position UP3 and the upper end position UP4, respectively. The lower end position LP3 is also an end edge position of the incident surface 31C, while the lower end position LP4 is also an end edge position of the incident surface 31D. The upper end position UP3 is also an end edge position of the emission surface 32C, while the upper end position UP4 is an end edge position of the emission surface 32D. Therefore, a distance between a position of the image light L3 when emitted from the emission surface 32C and a position of the image light L4 when emitted from the emission surface 32D is smaller than a distance between a position of the image light L3 when incident on the incident surface 31C and a position of the image light L4 when incident on the incident surface 31D.

The same is applied to the vicinities of the gap G23 and the gap G41. That is, for example, in the vicinity of the gap G23, the side surfaces 33B and 33C facing each other in the Y-axis direction are inclined so as to approach each other as the distances from the respective incident surfaces 31B and 31C increase, thus covering the gap G23. Therefore, a distance between a position of the image light L2 when emitted from the emission surface 32B and a position of the image light L3 when emitted from the emission surface 32C is smaller than a distance between a position of the image light L2 when incident on the incident surface 31B and a position of the image light L3 when incident on the incident surface 31C. In the vicinity of the gap G41, the side surfaces 33A and 33D facing each other in the Y-axis direction are inclined so as to approach each other as the distances from the respective incident surfaces 31A and 31D increase, thus covering the gap G41. Therefore, a distance between a position of the image light L1 when emitted from the emission surface 32A and a position of the image light L4 when emitted from the emission surface 32D is smaller than a distance between a position of the image light L1 when incident on the incident surface 31A and a position of the image light L4 when incident on the incident surface 31D.

The fiber optic plates 30A to 30D include the respective emission surfaces 32A to 32D that are opposite to the display surfaces 21A to 21D from which image light L1 to L4 are emitted. The emission surface 32A and the emission surface 32B are abutted against each other at the boundary position K12. The emission surface 32B and the emission surface 32C are abutted against each other at the boundary position K23. The emission surface 32C and the emission surface 32D are abutted against each other at the boundary position K34. The emission surface 32D and the emission surface 32A are abutted against each other at the boundary position K41. Thus, the emission surfaces 32A to 32D form one rectangular coupled image-light emission surface as a whole. The gap G is covered with the one coupled image-light emission surface formed by these emission surfaces 32A to 32D.

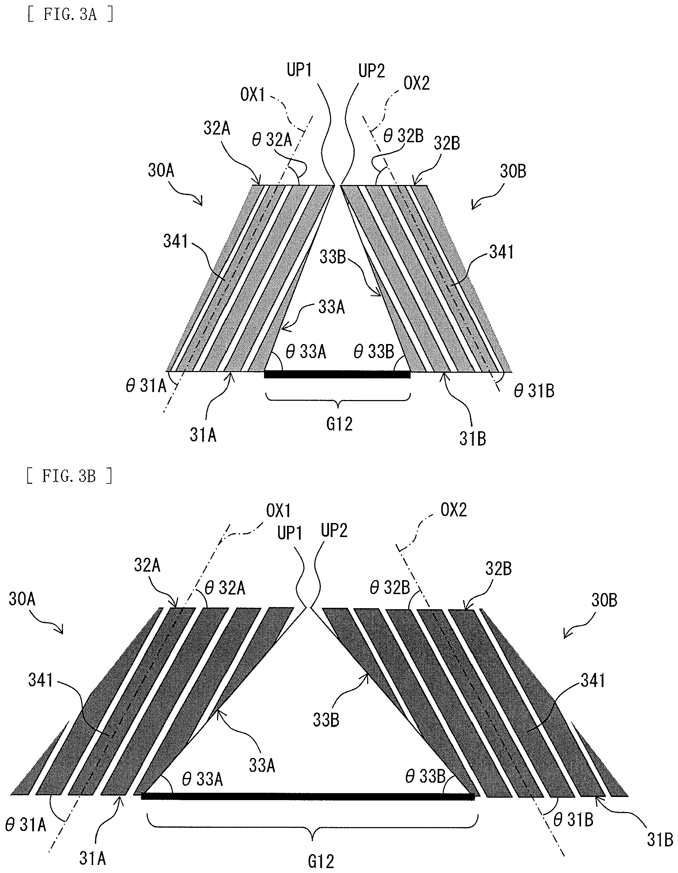

FIG. 3A is an enlarged cross-sectional view illustrating an example of a configuration in the vicinity of the side surface 33A of the fiber optic plate 30A and the side surface 33B of the fiber optic plate 30B facing the fiber optic plates 30A with the gap G12 interposed therebetween. FIG. 3B is an enlarged cross-sectional view illustrating an example of another configuration in the vicinity of the side surface 33A of the fiber optic plate 30A and the side surface 33B of the fiber optic plate 30B facing the fiber optic plates 30A with the gap G12 interposed therebetween.

In the example of one configuration illustrated in FIG. 3A, an inclination **angle** θ31A formed by the optical axis OX1 of the core portion 341 and the incident surface 31A of **the fiber optic plate 30A is smaller than an inclination angle** θ33A formed **by the side surface 33A and the incident surface 31A** (θ31A < θ33A). An **inclination angle** θ32A formed by the optical axis OX1 of the core portion 341 and the emission surface 32A of the fiber optic plate 30A is smaller than the inclination angle θ33A formed by the side surface 33A and the emission **surface 32A** (θ32A < θ33A). The same is applied to the fiber optic plate 30B. In an example of the configuration **illustrated in** **FIG. 3A****, an inclination angle** θ31B formed by the optical axis OX2 of the core portion 341 and the incident surface 31B of the fiber optic plate 30B is smaller than an inclination angle θ33B formed by the side surface 33B and the incident surface **31B** (θ31B < θ33B). **An inclination angle** θ32B formed by the optical axis OX2 of the core portion 341 and the emission surface 32B of the fiber optic plate 30B is smaller than the **inclination angle Θ33B** formed by the side surface 33B and the emission surface **32B** (θ32B **< Θ33B).** Thus, although some of the plurality of optical fibers 34 include a core portion 341 exposed on the emission surface 32 in the vicinity of the upper end position UP1 or UP2, the core portion 341 is also exposed on the incident surface 31. Therefore, the image light L is also emitted from the emission surface 32 in the vicinity of the upper end positions UP1 and UP2.

In contrast, in an example of one configuration illustrated in FIG. 3B, an **inclination angle** θ31A formed by the optical axis OX1 of the core portion 341 and the incident surface 31A of the fiber optic plate 30A is larger than an inclination angle θ33A formed **by the side surface 33A and the incident surface 31A** (θ31A > θ33A). **An inclination angle** θ32A formed by the optical axis OX1 of the core portion 341 and the emission surface 32A of the fiber optic plate 30A is larger than the inclination angle θ33A formed by the side surface 33A and the emission **surface 32A (032A >** θ33A). The same is applied to the fiber optic plate 30B. In the example of the configuration illustrated in FIG. 3B, an inclination **angle** θ31B formed by the optical axis OX2 of the core portion 341 and the incident surface 31B of the fiber optic plate 30B is larger than **an inclination angle** θ33B formed by the side surface 33B and the incident surface 31B (θ31B > θ33B). An inclination **angle** θ32B formed by the optical axis OX2 of the core portion 341 and the emission surface 32B of the fiber optic plate 30B is larger than the **inclination angle Θ33B** formed by the side surface 33B and the emission surface 32B (θ32B **>** θ33B). Thus, there is a possibility that among the plurality of optical fibers 34, some of the optical fibers 34 located in the vicinity of the upper end positions UP1 and UP2 include the core portion 341 that is exposed on the emission surface 32 but not exposed on the incident surface 31. Therefore, in the example of the configuration illustrated in FIG. 3B, there is a possibility that an area where the image light L is not emitted is present in the vicinity of the upper end positions UP1 and UP2 on the emission surface 32.

### (Optical Film 40)

The optical films 40A to 40B are respectively arranged along the emission surfaces 32A to 32D so as to correspond to the fiber optic plates 30A to 30D. The optical films 40A to 40D are provided on the opposite side to the display panels 20A to 20D as viewed from the fiber optic plates 30A to 30D. The optical films 40A to 40D are optical members that convert light distribution of the image light L1 to L4 emitted from the emission surfaces 32A to 32D. The optical films 40A to 40D respectively function to change the traveling directions of the image light L1 to L4 while transmitting the image light L1 to L4 emitted from the fiber optic plates 30A to 30D and to convert the light distribution of the image light L1 to L4 so as to exhibit uniform luminance distribution, for example, as viewed in the direction from the front. The optical films 40A to 40D each may have a refractive index smaller than a refractive index of the core portion 341 of the optical fiber 34 and greater than 1. This is to reduce propagation loss and ensure high transmission efficiency when the image light L1 to L4 emitted from the emission surfaces 32A to 32D of fiber optic plates 30A to 30D are incident on the optical films 40A to 40D.

The display apparatus 1 may further include an adhesive layer 61 (FIG. 2A) between the optical film 40 and the emission surface 32 of the fiber optic plate 30. The adhesive layer 61 transmits the image light L. The adhesive layer 61 has a refractive index equal to or less than the refractive index of the core portion 341 of the optical fiber 34 and larger than the refractive index of the optical film 40. This is to reduce propagation loss more and ensure higher transmission efficiency when the image light L emitted from the emission surface 32 of the fiber optic plate 30 is incident on the optical film 40. Further, as illustrated in FIG. 2A, an adhesive layer 62 may be provided between the display panel 20 and the fiber optic plate 30. The adhesive layer 62 transmits the image light L. The adhesive layer 62 has a refractive index equal to or less than the refractive index of the core portion 341 of the optical fiber 34. This is to reduce propagation loss more and ensure higher transmission efficiency when the image light L emitted from the display panel 20 is incident on the fiber optic plate 30.

### [Operation and Effects of Display Apparatus 1]

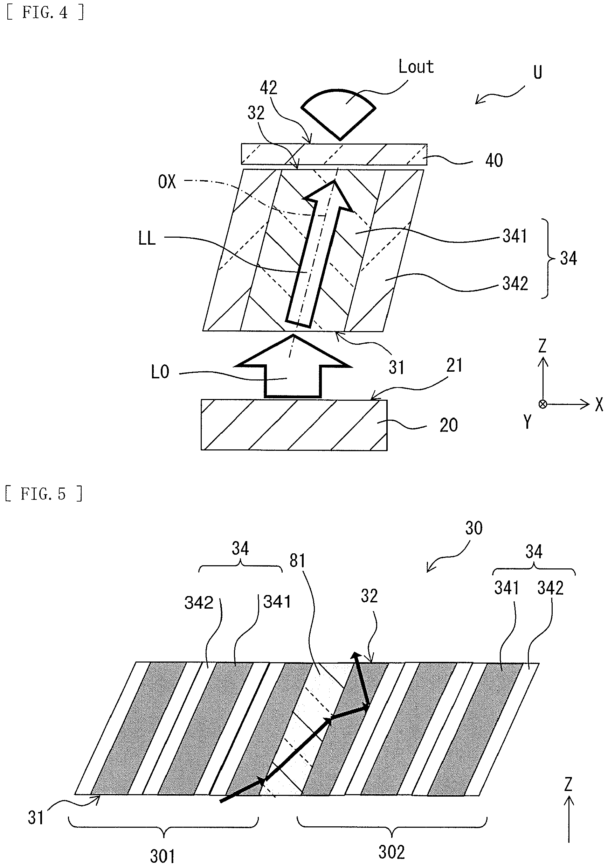

Next, a propagation path of the image light L in the display apparatus 1 illustrated in FIG. 1A will be described below with reference to FIG. 4. FIG. 4 is a cross-sectional view for conceptually explaining a state of propagation of the image light L in the display apparatus 1. In the display apparatus 1, a desired image is displayed on the display panel 20, and the image light L is emitted from the display surface 21. In the present specification and the drawings, the image light L at the stage where it is emitted from the display surface 21 is described as image light L0, for convenience. The image light L0 is incident on the incident surface 31 of the fiber optic plate 30 and then propagates inside the core portion 341 of the optical fiber 34 along the optical axis OX. In the present specification and the drawings, the image light L that propagates inside the core portion 341 of the optical fiber 34 is described as image light LL, for convenience. When the image light L0 is incident on the incident surface 31 of the fiber optic plate 30, the loss of light amount occurs due to reflection or the like. In FIG. 5A, a difference between the light amount of the image light L0 and the light amount of the image light LL is expressed by the thickness of each arrow. The image light LL is incident on an incident surface 41 of the optical film 40 after being emitted from the emission surface 32. The image light LL has its distribution converted in the optical film 40, for example, is adjusted to have uniform luminance distribution as viewed in the direction from the front, and then is emitted as image light Lout from the emission surface 42.

FIG. 5 is a conceptual diagram for explaining a state of the image light LL that propagates through an abutting portion between the light guide member 301 and the light guide member 302 in the fiber optic plate 30. For example, the core portion 341 located at the outermost edge of the light guide member 301 is not covered with the cladding portion 342, and its side surface is often exposed. This is due to machining accuracy when cutting the light guide member 301. It is extremely difficult to completely remove such a core portion 341 with its side surface exposed. The image light LL incident on such a core portion 341 with its side surface exposed leaks from the optical fiber 34 without propagating through the core portion 341. However, according to the claimed invention, the filler material 81 covers the side surface of the light guide member 301, thereby allowing the image light LL leaking from the core portion 341 to enter the filler material 81. After being transmitted through the filler material, the image light LL is incident on the core portion 341 exposed on the side surface of the adjacent light guide member 302. The image light LL incident on the core portion 341 of the light guide member 302 propagates through the core portion 341 to be emitted from the emission surface 32 of the light guide member 302 to the optical film 40. Therefore, also in the vicinity of the abutting portion between the light guide members 301 and 302, the image light LL incident on the incident surface 31 is allowed to be efficiently emitted from the emission surface 32 while avoiding its reflection or scattering.

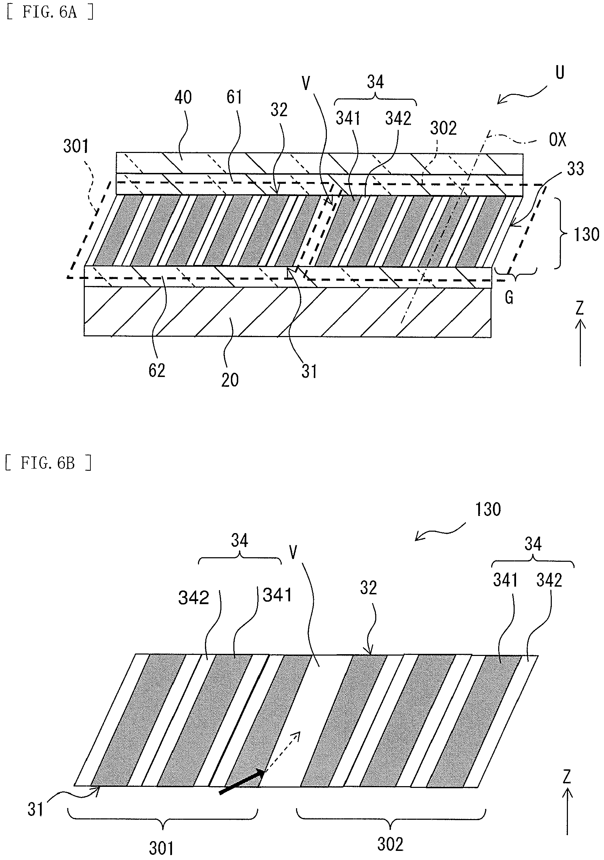

On the other hand, FIG. 6A is a cross-sectional view illustrating the display apparatus that includes a fiber optic plate 130 as a reference example, not according to the invention. In the fiber optic plate 130 as the reference example, a filler material is not present in an abutting portion between the light guide member 301 and the light guide member 302, and an air layer V is formed in the abutting portion. Thus, as illustrated in FIG. 6B, the image light LL incident on the core portion 341 with its side surface exposed in the light guide member 301 leaks from the optical fiber 34 into the air layer V without propagating through the core portion 341. Since scattering of the light occurs at an interface between the air layer V and the core portions 341, for example, the amount of the image light LL that is incident again on the core portion 341 exposed on the side surface of the adjacent light guide member 302 becomes extremely small. Therefore, the light amount of part of the image light LL incident on the vicinity of the abutting portion between the light guide members 301 and 302 is lost, and thereby the vicinity of the abutting portion may be visually identified by the viewer as the dark line.

Thus, in the display apparatus 1 of the present embodiment, the filler material enabling transmission of the image light L is provided in the gap between the light guide members 301 and 302. This makes it possible to reduce the propagation loss of the image light L incident on the vicinity of the abutting portion between the light guide members 301 and 302, thereby suppressing the occurrence of the dark line in the displayed image.

By setting the refractive index of the filler material 81 to be equal to or less than the refractive index of the core portion 341 of each of the light guide members 301 to 304 and to be greater than 1, the propagation loss of the image light L is reduced more, making it possible to ensure the higher transmission efficiency.

The optical film 40 is provided on the opposite side to the display panel 20 as viewed from the fiber optic plate 30. The optical film 40 converts the light distribution of the image light L emitted from the emission surface 32. Consequently, the optical film 40 enables emission of the image light Lout that has been adjusted so as to have uniform luminance distribution as viewed in the desired direction, for example, in direction from the front. Further, providing the optical film 40 makes it possible to reduce the loss of light amount and thus improve the luminance of the image light Lout.

As the display apparatus 1 further includes the adhesive layer 61 between the optical film 40 and the emission surface 32 of the fiber optic plate 30, the propagation loss when the image light L is incident on the optical film 40 is reduced more, thereby making it possible to ensure the higher transmission efficiency of the image light L.

Moreover, the display apparatus 1 is configured to form one rectangular, coupled image-light emission surface as a whole by coupling the emission surfaces 32A to 32D in the fiber optic plates 30A to 30D without any gap therebetween. That is, the gap G between the display panels 20 is covered by the one coupled image-light emission surface formed by the emission surfaces 32A to 32D. Therefore, it is possible to form an image display surface with a seam between the display panels less visible to a viewer and a larger display area, and thereby to provide the viewer with a larger image having excellent aesthetic properties.

Furthermore, in the display apparatus 1, the inclination angle θ31 formed by the incident surface 31 and the optical axis OX of the core portion 341 of the fiber optic plate 30 as well as the inclination angle θ32 formed by the emission surface 32 and the optical axis OX of the core portion 341 of the fiber optic plate 30 of the fiber optic plate 30 are smaller than the inclination angle θ33 formed by the side surface 33 and the incident surface 31. This makes it possible to prevent the loss of the image light L in the vicinity of the boundary position between the emission surfaces 32.

### <2. Modification Examples>

Although the present disclosure has been described above with reference to the embodiments, the present disclosure is not limited to the above-described embodiments and the like, and various modifications are implementable thereto. For example, the above-described embodiments have exemplified the case where the optical axis OX of the optical fiber 34 is inclined with respect to the display surface 21, but the present disclosure is not limited thereto. The display apparatus and the optical device of the present disclosure may include, for example, a light guide member in which the optical axis of the optical fiber is vertical to the display surface.

Although the above-described embodiments and the like have exemplified the case where the corresponding components of the plurality of display units U have substantially the same shape and size, the present disclosure is not limited thereto. In the present disclosure, the components of the plurality of display units U may have partially or wholly different shape or size.

The effects described in the present specification are illustrative and not limited to the description thereof. Other effects may be provided.

## Claims

1. A display apparatus comprising:
a first display section (30A) including a first display surface from which a first image light is emitted;
a first light guide member (302A) including an integrated bundle of a plurality of first optical fibers, each of the first optical fibers including a first core portion (341) and a first cladding (342) portion surrounding the first core portion, the first core portion guiding the first image light from a first incident surface (31) facing the first display surface to a first emission surface (32) positioned opposite to the first incident surface;
a second light guide member (301A) disposed adjacent to the first light guide member, the second light guide member including an integrated bundle of a plurality of second optical fibers, each of the second optical fibers including a second core portion (341) and a second cladding portion (342) surrounding the second core portion, the second core portion guiding the first image light from a second incident surface (31) facing the first display surface to a second emission surface (32) positioned opposite to the second incident surface; and
a filler material (81) filled in a gap between the first light guide member and the second light guide member, the filler material transmitting the first image light,
**characterized in that** the filler material covers side surfaces of the first light member and the second light member such, that, if a side surface of a first core portion and a side surface of a second core portion is exposed towards the filler material, light leaking from the first core portion is transmitted through the filter material towards the second core portion and propagates through the second core portion towards the second emission surface.

2. The display apparatus according to claim 1, wherein
a refractive index of the filler material is equal to or less than each of a refractive index of the first core portion and a refractive index of the second core portion, and is greater than 1.

3. The display apparatus according to claim 1, further comprising:
a second display section (30B) disposed adjacent to the first display section with a first gap interposed therebetween, the second display section including a second display surface emitting a second image light; and
a third light guide member (301B) including an integrated bundle of a plurality of third optical fibers, each of the third optical fibers including a third core portion and a third cladding portion surrounding the third core portion, the third core portion guiding the second image light from a third incident surface facing the second display surface to a third emission surface positioned opposite to the third incident surface, wherein
each of a plurality of the first core portions of the first light guide member has a first optical axis (OX1) inclined with respect to both the first incident surface and the first emission surface,
each of a plurality of the third core portions of the third light guide member has a third optical axis (OX2) inclined with respect to both the third incident surface and the third emission surface, and
at a boundary position between the first light guide member and the third light guide member, a first distance between an end edge position of the first incident surface of the first light guide member and an end edge position of the third incident surface of the third light guide member is larger than a second distance between an end edge position of the first emission surface of the first light guide member and an end edge position of the third emission surface of the third light guide member.

4. The display apparatus according to claim 3, wherein
the first light guide member has a first side surface inclined with respect to both the first incident surface and the first emission surface,
the third light guide member has a third side surface inclined with respect to both the third incident surface and the third emission surface,
a first inclination angle formed by the first optical axis and the first incident surface is larger than a second inclination angle formed by the first side surface and the first incident surface, and
a third inclination angle formed by the third optical axis and the third incident surface is larger than a fourth inclination angle formed by the third side surface and the third incident surface.

5. An optical device comprising:
a first light guide member and a second light guide member disposed adjacent to each other, each of the first light guide member and the second light guide member including an integrated bundle of a plurality of optical fibers, each of the optical fibers including a core portion and a cladding portion surrounding the core portion, the core portion guiding external light from an incident surface, on which the external light is incident, to an emission surface positioned opposite to the incident surface; and
a filler material filled in a gap between the first light guide member and the second light guide member, the filler material transmitting the external light,
**characterized in that** the filler material covers side surfaces of the first light member and the second light member such, that, if a side surface of a first core portion of the first light guide member and a side surface of a second core portion of the second light guide member is exposed towards the filler material, light leaking from the first core portion is transmitted through the filler material towards the second core portion and propagates through the second core portion towards the second emission surface.

## Patentansprüche

1. Anzeigeeinrichtung, die Folgendes umfasst:
einen ersten Anzeigeabschnitt (30A) einschließlich einer ersten Anzeigeoberfläche, von der ein erstes Bildlicht emittiert wird;
ein erstes Lichtleiterelement (302A) einschließlich eines integrierten Bündels mehrerer erster optischer Fasern, wobei jede der ersten optischen Fasern einen ersten Kernteil (341) und einen ersten Mantelteil (342), der den ersten Kernteil umgibt, beinhaltet, wobei der erste Kernteil das erste Bildlicht von einer ersten Einfallsoberfläche (31), die der ersten Anzeigeoberfläche zugewandt ist, zu einer ersten Emissionsoberfläche (32) leitet, die gegenüber der ersten Einfallsoberfläche positioniert ist;
ein zweites Lichtleiterelement (301A), das angrenzend an das erste Lichtleiterelement angeordnet ist, wobei das zweite Lichtleiterelement ein integriertes Bündel mehrerer zweiter optischer Fasern beinhaltet, wobei jede der zweiten optischen Fasern einen zweiten Kernteil (341) und einen zweiten Mantelteil (342), der den zweiten Kernteil umgibt, beinhaltet, wobei der zweite Kernteil das erste Bildlicht von einer zweiten Einfallsoberfläche (31), die der ersten Anzeigeoberfläche zugewandt ist, zu einer zweiten Emissionsoberfläche (32) leitet, die gegenüber der zweiten Einfallsoberfläche positioniert ist; und
ein Füllstoffmaterial (81), das in einen Spalt zwischen dem ersten Lichtleiterelement und dem zweiten Lichtleiterelement eingefüllt ist, wobei das Füllstoffmaterial das erste Bildlicht transmittiert,
**dadurch gekennzeichnet, dass**
das Füllstoffmaterial Seitenoberflächen des ersten Lichtelements und des zweiten Lichtelements bedeckt, so dass, falls eine Seitenoberfläche eines ersten Kernteils und eine zweite Seitenoberfläche eines zweiten Kernteils zu dem Füllstoffmaterial hin freigelegt sind, von dem ersten Kernteil leckendes Licht durch das Füllstoffmaterial zu dem zweiten Kernteil transmittiert wird und durch den zweiten Kernteil zu der zweiten Emissionsoberfläche propagiert.

2. Anzeigeeinrichtung nach Anspruch 1, wobei
ein Brechungsindex des Füllstoffmaterials gleich oder kleiner als sowohl ein Brechungsindex des ersten Kernteils als auch ein Brechungsindex des zweiten Kernteils ist und größer als 1 ist.

3. Anzeigeeinrichtung nach Anspruch 1, die ferner Folgendes umfasst:
einen zweiten Anzeigeabschnitt (30B), der angrenzend an den ersten Anzeigeabschnitt mit einem ersten Spalt dazwischenliegend angeordnet ist, wobei der zweite Anzeigeabschnitt eine zweite Anzeigeoberfläche beinhaltet, die ein zweites Bildlicht emittiert; und
ein drittes Lichtleiterelement (301B) einschließlich eines integrierten Bündels mehrerer dritter optischer Fasern, wobei jede der dritten optischen Fasern einen dritten Kernteil und einen dritten Mantelteil, der den dritten Kernteil umgibt, beinhaltet, wobei der dritte Kernteil das zweite Bildlicht von einer dritten Einfallsoberfläche, die der zweiten Anzeigeoberfläche zugewandt ist, zu einer dritten Emissionsoberfläche leitet, die gegenüber der dritten Einfallsoberfläche positioniert ist, wobei
jeder von mehreren der ersten Kernteile des ersten Lichtleiterelements eine erste optische Achse (OX1) aufweist, die mit Bezug auf sowohl die erste Einfallsoberfläche als auch die erste Emissionsoberfläche geneigt ist,
jeder von mehreren der dritten Kernteile des dritten Lichtleiterelements eine dritte optische Achse (OX2) aufweist, die mit Bezug auf sowohl die dritte Einfallsoberfläche als auch die dritte Emissionsoberfläche geneigt ist, und
an einer Grenzposition zwischen dem ersten Lichtleiterelement und dem dritten Lichtleiterelement, eine erste Entfernung zwischen einer Endrandposition der ersten Einfallsoberfläche des ersten Lichtleiterelements und einer Endrandposition der dritten Einfallsoberfläche des dritten Lichtleiterelements größer als eine zweite Entfernung zwischen einer Endrandposition der ersten Lichtemissionsoberfläche des ersten Lichtleiterelements und einer Endrandposition der dritten Emissionsoberfläche des dritten Lichtleiterelements ist.

4. Anzeigeeinrichtung nach Anspruch 3, wobei das erste Lichtleiterelement eine erste Seitenoberfläche aufweist, die mit Bezug auf sowohl die erste Einfallsoberfläche als auch die erste Emissionsoberfläche geneigt ist,
das dritte Lichtleiterelement eine dritte Seitenoberfläche aufweist, die mit Bezug auf sowohl die dritte Einfallsoberfläche als auch die dritte Emissionsoberfläche geneigt ist,
ein erster Neigungswinkel, der durch die erste optische Achse und die erste Einfallsoberfläche gebildet wird, größer als ein zweiter Neigungswinkel ist, der durch die erste Seitenoberfläche und die erste Einfallsoberfläche gebildet wird, und
ein dritter Neigungswinkel, der durch die dritte optische Achse und die dritte Einfallsoberfläche gebildet wird, größer als ein vierter Neigungswinkel ist, der durch die dritte Seitenoberfläche und die dritte Einfallsoberfläche gebildet wird.

5. Optische Vorrichtung, die Folgendes umfasst:
ein ersteres Lichtleiterelement und ein zweites Lichtleiterelement, die aneinander angrenzend angeordnet sind, wobei sowohl das erste Lichtleiterelement als auch das zweite Lichtleiterelement ein integriertes Bündel mehrerer optischer Fasern beinhalten, wobei jede der optischen Fasern einen Kernteil und einen Mantelteil, der den Kernteil umgibt, beinhaltet, wobei der Kernteil externes Licht von einer Einfallsoberfläche, auf die das externe Licht einfällt, zu einer Emissionsoberfläche leitet, die gegenüber der Einfallsoberfläche positioniert ist; und
ein Füllstoffmaterial, das in einen Spalt zwischen dem ersten Lichtleiterelement und dem zweiten Lichtleiterelement eingefüllt ist, wobei das Füllstoffmaterial das externe Licht transmittiert,
**dadurch gekennzeichnet, dass**
das Füllstoffmaterial Seitenoberflächen des ersten Lichtelements und des zweiten Lichtelements bedeckt, so dass, falls eine Seitenoberfläche eines ersten Kernteils des ersten Lichtleiterelements und eine zweite Seitenoberfläche eines zweiten Kernteils des zweiten Lichtleiterelements zu dem Füllstoffmaterial hin freigelegt sind, von dem ersten Kernteil leckendes Licht durch das Füllstoffmaterial zu dem zweiten Kernteil transmittiert wird und durch den zweiten Kernteil zu der zweiten Emissionsoberfläche propagiert.

## Revendications

1. Appareil d'affichage comprenant :
une première section d'affichage (30A) comportant une première surface d'affichage depuis laquelle une première lumière d'image est émise ;
un premier élément de guidage de la lumière (302A) comportant un faisceau intégré d'une pluralité de premières fibres optiques, chacune des premières fibres optiques comportant une première partie d'âme (341) et une première partie de gaine (342) entourant la première partie d'âme, la première partie d'âme guidant la première lumière d'image depuis une première surface d'incidence (31) faisant face à la première surface d'affichage jusqu'à une première surface d'émission (32) positionnée à l'opposé de la première surface d'incidence ;
un deuxième élément de guidage de la lumière (301A) disposé au voisinage du premier élément de guidage de la lumière, le deuxième élément de guidage de la lumière comportant un faisceau intégré d'une pluralité de deuxièmes fibres optiques, chacune des deuxièmes fibres optiques comportant une deuxième partie d'âme (341) et une deuxième partie de gaine (342) entourant la deuxième partie d'âme, la deuxième partie d'âme guidant la première lumière d'image depuis une deuxième surface d'incidence (31) faisant face à la première surface d'affichage jusqu'à une deuxième surface d'émission (32) positionnée à l'opposé de la deuxième surface d'incidence ; et
un matériau de remplissage (81) versé dans un espace entre le premier élément de guidage de la lumière et le deuxième élément de guidage de la lumière, le matériau de remplissage transmettant la première lumière d'image,
**caractérisé en ce que**
le matériau de remplissage recouvre des surfaces latérales du premier élément de guidage de la lumière et du deuxième élément de guidage de la lumière de telle sorte que, si une surface latérale d'une première partie d'âme et une surface latérale d'une deuxième partie d'âme sont exposées vers le matériau de remplissage, la lumière s'échappant de la première partie d'âme est transmise à travers le matériau de remplissage vers la deuxième partie d'âme et se propage à travers la deuxième partie d'âme vers la deuxième surface d'émission.

2. Appareil d'affichage selon la revendication 1, dans lequel
un indice de réfraction du matériau de remplissage est égal ou inférieur à la fois à un indice de réfraction de la première partie d'âme et un indice de réfraction de la deuxième partie d'âme, et est supérieur à 1.

3. Appareil d'affichage selon la revendication 1, comprenant en outre :
une deuxième section d'affichage (30B) disposée au voisinage de la première section d'affichage avec un premier espace intercalé entre elles, la deuxième section d'affichage comportant une deuxième surface d'affichage émettant une deuxième lumière d'image ; et
un troisième élément de guidage de la lumière (301B) comportant un faisceau intégré d'une pluralité de troisièmes fibres optiques, chacune des troisièmes fibres optiques comportant une troisième partie d'âme et une troisième partie de gaine entourant la troisième partie d'âme, la troisième partie d'âme guidant la deuxième lumière d'image depuis une troisième surface d'incidence faisant face à la deuxième surface d'affichage jusqu'à une troisième surface d'émission positionnée à l'opposé de la troisième surface d'incidence, dans lequel
chacune d'une pluralité des premières parties d'âme du premier élément de guidage de la lumière a un premier axe optique (OX1) incliné à la fois par rapport à la troisième surface d'incidence et à la troisième surface d'émission,
chacune d'une pluralité des troisièmes parties d'âme du troisième élément de guidage de la lumière a un troisième axe optique (OX2) incliné à la fois par rapport à la troisième surface d'incidence et à la troisième surface d'émission, et,
à une position limite entre le premier élément de guidage de la lumière et le troisième élément de guidage de la lumière, une première distance entre une position de bord d'extrémité de la première surface d'incidence du premier élément de guidage de la lumière et une position de bord d'extrémité de la troisième surface d'incidence du troisième élément de guidage de la lumière est plus grande qu'une deuxième distance entre une position de bord d'extrémité de la première surface d'émission du premier élément de guidage de la lumière et une position de bord d'extrémité de la troisième surface d'émission du troisième élément de guidage de la lumière.

4. Appareil d'affichage selon la revendication 3, dans lequel
le premier élément de guidage de la lumière a une première surface latérale inclinée à la fois par rapport à la première surface d'incidence et à la première surface d'émission,
le troisième élément de guidage de la lumière a une troisième surface latérale inclinée à la fois par rapport à la troisième surface d'incidence et à la troisième surface d'émission,
un premier angle d'inclinaison formé par le premier axe optique et la première surface d'incidence est plus grand qu'un deuxième angle d'inclinaison formé par la première surface latérale et la première surface d'incidence, et
un troisième angle d'inclinaison formé par le troisième axe optique et la troisième surface d'incidence est plus grand qu'un quatrième angle d'inclinaison formé par la troisième surface latérale et la troisième surface d'incidence.

5. Dispositif optique comprenant :
un premier élément de guidage de la lumière et un deuxième élément de guidage de la lumière disposés au voisinage l'un de l'autre, le premier élément de guidage de la lumière et le deuxième élément de guidage de la lumière comportant chacun un faisceau intégré d'une pluralité de fibres optiques, chacune des fibres optiques comportant une partie d'âme et une partie de gaine entourant la partie d'âme, la partie d'âme guidant de la lumière externe depuis une surface d'incidence sur laquelle la lumière externe est incidente jusqu'à une surface d'émission positionnée à l'opposé de la surface d'incidence ; et
un matériau de remplissage versé dans un espace entre le premier élément de guidage de la lumière et le deuxième élément de guidage de la lumière, le matériau de remplissage transmettant la lumière externe,
**caractérisé en ce que**
le matériau de remplissage recouvre des surfaces latérales du premier élément de guidage de la lumière et du deuxième élément de guidage de la lumière de telle sorte que, si une surface latérale d'une première partie d'âme du premier élément de guidage de la lumière et une surface latérale d'une deuxième partie d'âme du deuxième élément de guidage de la lumière sont exposées vers le matériau de remplissage, la lumière s'échappant de la première partie d'âme est transmise à travers le matériau de remplissage vers la deuxième partie d'âme et se propage à travers la deuxième partie d'âme vers la deuxième surface d'émission.
